# EUROPEAN PATENT APPLICATION

(11) **EP 2 975 275 A1**
(43) Date of publication of application: **20.01.2016**
(21) Application number: 15171416.9
(22) Date of filing: 10.06.2015
(51) Int. Cl.: F16B 37/08, F16B 39/30

(54) **A COMBINATION OF A BOLT AND A RECEIVING MEANS, A METHOD FOR COUPLING TWO OBJECTS, A BOLT AND A RECEIVING MEANS**

(30) Priority: 10.06.2014 NL 2012970
(71) Applicant: Delfortrie Holding B.V., 3734 GE Den Dolder (NL)
(72) Inventor: DELFORTRIE, Maarten Jan Olof, 3734 GE Den Dolder (NL)
(74) Representative: Plaggenborg, Menko Bernard

(57) **Abstract**

The invention relates to a combination of a bolt (1) and a cooperating receiving means (2), said bolt comprising a bolt body (3) extending in a longitudinal direction and that is provided with external thread (9) and said receiving means comprising internal thread (9) cooperating with said bolt's thread for receiving said bolt in said longitudinal direction, characterized in that said bolt is provided with thread at a first portion of its circumference, such that said bolt body in the longitudinal direction over a second portion of the periphery is free of thread; and wherein said receiving means in the longitudinal direction over a portion of its periphery is free of thread, such that said bolt can be inserted at least partly longitudinally in said receiving means without a screwing movement.

## Description

The present invention relates to a combination of a bolt and a cooperating receiving means according to the preamble of claim 1.

Such combination is known in the art. For example, objects are coupled on a large scale by means of such combination of a bolt and a receiving means. The advantage of such coupling method is that an adequate, long lasting but still releasable coupling is obtained.

Such method however, has a disadvantage as well, since the step of coupling takes relatively much time since a large number of screwing movements are required for obtaining a clamping coupling of said objects.

Therefore, there is need for an improved method for mutually coupling objects.

The invention aims at providing an improved combination of a bolt and a receiving means of the kind mentioned in the preamble.

More in particular the invention aims at providing such combination as mentioned in the preamble that yields a quick but nevertheless long lasting and sturdy coupling.

The invention also aims at providing an improved method for mutually coupling objects.

SO as to obtain at least one of the above indicated aims the invention provides according to a first embodiment a combination of a bolt and a receiving means comprising the features of claim 1. This combination has the advantage that coupling of two objects can be obtained very quickly and adequately. With a simple push and screw movement without applying any high force, the objects are coupled. The screwing movement required is less than a complete circular movement bolt.

It has also shown that the bolt and the receiving means according to the invention are both compatible with usual bolts and receiving means with corresponding thread, and wherein the thread is provided at the total circumferential surface. Such synergetic result has the advantage that the parts of the combination may always be applied with the corresponding part of the combination according to the present invention.

According to the invention it is preferred for the combination that the threaded grooves in at least one of the bolt and the receiving means comprise a first, open end for receiving the receiving means' thread or the bolt's thread so as to provide a mutual cooperation of bolt and receiving means, and a second, closed end for locking at said end the receiving means' thread and the bolt's thread in the bolt's thread and the receiving means' thread, respectively. As a result, the bolt and the receiving means will not have to be rotated too much, since such might lead to the fact that the mutual thread grooves, after they have been coupled maximally and subsequently are rotated still further, are disconnected at least partially which would lead to a lower tensile strength and which might even lead to a complete disconnection of the thread grooves. The coupling then would be completely lost.

It has surprisingly shown that by providing such closed end another advantage is obtained. Especially, but not solely, when the closed ends of the thread grooves provide a substantially continuous edge defining the portion of said bolt's surface or the receiving means' surface that is free of thread, the bolt and the receiving means can be mutually coupled more easily. Especially when both parts, both the bolt and the receiving means, comprise such closed end, both said closed ends may be forced towards each ther when pushing the bolt into said receiving means, yielding an unhindered movement. A screwing movement in the direction of the pitch of the thread for coupling both parts, then will yield a secure coupling wherein the user will at all times be sure that said objects are coupled maximally.

When rotating (also identified as turning or screwing) the bolt in the receiving means for coupling same, as mentioned above, the bolt can be rotated until the end of the thread of the receiving means is reached, such that the inclusion of the bolt's threads is maximally. The bolt cannot be rotated too far preventing the said threads of both parts are disconnected. Hence, coupling is ensured.

For example, the bolt's circumferential segment with thread may be smaller than the receiving means' segment, and as a consequence the bolt's thread is included completely within the receiving means' thread. When the circumferential segment with thread in the receiving means is smaller than the bolt's threaded segment, in a similar fashion, the bolt's thread will be provided with a closed end.

Furthermore, it is preferred that the receiving means' thread at its open end is somewhat tapered near the end of the open side and that he bolt's thread, at the end where it is fed into the receiving means' thread, is tapered towards said end as well. As a consequence, the threads may be connected more easy. Similarly, such also applies to bolts and receiving means that are not provided with a closed end. The end of the thread of a bolt or a receiving means that is to be fed into the thread of the receiving means or the bolt, respectively, is preferably tapered. The term "tapered" also means that a slanted shape or narrowed shape.

More in particular it is preferred that the bolt is provided with thread over a radial circumferential segment of maximally 180°, preferably maximally 120°, more preferably maximally 100°. Such yields a very good coupling of bolt and receiving means, preventing unintentional loosening. In addition, the shearing force of the thread is sufficient to provide a required strength.

Accordingly, it is preferred that said receiving means is free of thread over a radial circumferential segment of less than 180°, preferably less than 240°, more preferably less than 260°. This provides a similar advantage as mentioned above with respect to the radial circumferential segment of the bolt. A distribution of 180° of thread on the bolt and a little less than 180° of thread in the receiving means provides a largest shearing force when both threads are substantially completely intermingled and requires a smallest rotation for obtaining a coupling, to wit a half rotation.

Preferably, in the combination according to the invention, said bolt is provided with thread that extends from said bolt body.

Preferably, in the combination according to the invention, said receiving means is provided with thread that extends from an inner wall.

In the combination according to the invention the sum of (a) the threaded radial circumferential segment of said bolt and (b) the threaded radial circumferential segment of said receiving means, is less than 360°, preferably less than 355°, more preferably less than 350°, and preferably is more than 250°, more preferably more than 300°, and still more preferably more than 340°. Such ensures an easy feeding of the bolt into the receiving means is ensured, but a too large play is prevented. Additionally, it is preferred for the total sum as mentioned above, to be as large as possible which ensures a maximum clamping.

The invention further relates to a combination wherein the thread's pitch angle of the bolt and the thread's pitch angle of the receiving means are dissimilar, for example with a mutual difference of less than 10%, preferably less than 5%. Such yields a larger radial clamping of the bolt's thread with the receiving means' thread. This is a unique way of increasing the clamping action, which is not possible when using normal thread on a bolt and a receiving means that both are provided with thread on their complete surface.

It is preferred to apply so-called buttress thread wherein said receiving means' thread and said bolt's thread are comprised of buttress thread. Such thread has a straight toothing, in which a wall of the thread substantially radially extends from the surface of the bolt body or the receiving means. This provides a larger shearing force with respect to usual DIN thread comprising two slanted walls as with respect to the said surface. More in particular, it is preferred to provide the radially extending wall ate the side of the head of the bolt, that means, the side of the thread that is directed away from the receiving means, which yields a maximum shearing force preventing the bolt to be pulled out of the receiving means. A further enlargement of the transversal clamping force may be obtained by providing the thread with an adhesive.

According to a further aspect, the invention relates to a method for mutually coupling two objects by applying a combination of a bolt and a cooperating receiving means as described above and in the claims 1-8 in various embodiments and preferred variants, wherein said both objects are provided with a through hole, comprising the steps of: - positioning the objects against each other with the openings mutually aligned; - inserting in an opening of aid first object said receiving means and inserting in the opening of said second object said bolt. The method is characterized in that the method further comprises the steps of: - inserting said bolt in said receiving means without a screwing movement, wherein said bolt's external thread is guided through said portion that is free from thread until a clamping force is exerted on both said objects; and - mutually turning the bolt and the receiving means so as to mutually couple said bolt and said receiving means by coupling said threads. Such provides a very quick and secure coupling of both said objects.

More in particular it is preferred that de method is used for clampingly coupling a covering plate for a door or a window, for example a rosette or a plate (such as a long plate or a short plate) against a door leaf or a window frame.

More in particular it is preferred that both objects are shields, plates or rosettes to be positioned against a door leaf, hereafter identified as covering plate. A first covering plate may comprise the bolt in an opening and the second covering plate may comprise the receiving means in an opening, wherein each covering plate is aligned with a respective opening with a through hole in the door leaf. A clamping coupling of the covering plates is then obtained in a single, limited movement of a hand.

According to a further aspect, the invention also relates to a bolt for use in a combination according to any of claims 1-8, comprising a bolt body with external thread, said bolt body extending in a longitudinal direction. The bolt is characterized in that said bolt is provided with thread over a portion of the circumference of the bolt body, such that said bolt body in a longitudinal direction is free from thread over part of its circumference.

Preferably, the thread grooves of said bolt comprise a first, open end for receiving the receiving means' thread so as to provide a mutual cooperation of bolt and receiving means, and a second, closed end for locking at said end the receiving means' thread in the bolt's thread. Such yields a secure coupling of a bolt with a receiving means, as mentioned and explained above with reference to the combination according to the invention.

In a similar fashion, the invention relates to a receiving means for use in a combination according to any of claims 1-8, wherein the receiving means is provided with internal thread for cooperation with the bolt's thread. The receiving means is characterized in that said receiving means in a longitudinal direction is free from thread, such that a bolt that is provided with thread over only a portion of the circumference of its body, said body in a longitudinal direction being free from thread over a portion of its circumference, can be guided into said receiving means without a screwing movement. This yields an embodiment wherein the receiving means, in cooperation with a bolt as mentioned above, provides a quick and adequate coupling.

Preferably, the thread grooves of said receiving means comprise a first, open end for receiving the bolt's thread so as to provide a mutual cooperation of bolt and receiving means, and a second, closed end for locking at said end the bolt's thread in the receiving means' thread. As a consequence, a secure coupling of the bolt and the receiving means is obtained, as identified above with reference to the combination according to the invention.

The invention will hereafter be explained with reference to the drawings. The drawing shows in:
Fig. 1 and 7 a perspective side view of a combination of a bolt and a receiving means according to the invention,
Fig. 2, 3, 4 a view of a bolt according to the invention,
Fig. 5 and 8 a sectional view of a receiving means according to the invention, and
Fig. 6 a view of a receiving means according to the invention.

In the drawing, the same and similar parts are identified and denoted by means of the same reference numbers. However, for eligibility and simplicity, not all parts that are required for a practical embodiment are shown in the drawing.

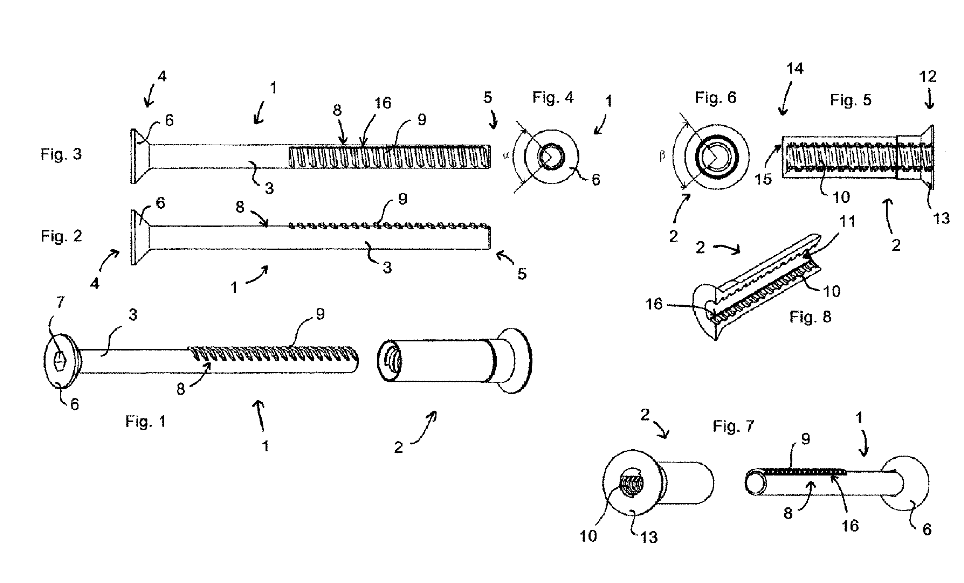

Fig. 1 shows a perspective view of a combination of a bolt 1 and a receiving means 2. The bolt 1 comprises a bolt body 3 with a first end 4 and a second end 5. The bolt body 3 extends in a longitudinal direction between said both ends 4, 5. At the first end 4 a bolt head 6 is provided, in this embodiment comprising a recess 7 for receiving a hex key. Part of the surface 8 of bolt body 3 is provided with thread 9, extending from body 3. Said thread 9 is provided over only part of the circumference of bolt body 3, and extends in the longitudinal direction. In the embodiment shown, thread 9 is provided over an arc segment of about 88°.

Fig. 7 also shows a perspective view of the combination of bolt 1 and receiving means 2 according to the invention, from another view point. It can be seen clearly that thread 9 extends over only part of the circumference of bolt body 3.

Bolt 1 is furthermore shown from two points in Fig. 2 and Fig. 3. Fig. 2 shows the bolt 1 in side view whereas Fig. 3 shows the bolt 1 in top view. Fig. 4 shows bolt 1 in front view, from the second end 5. It can be clearly seen in these figures that thread 9 is provided at only part of surface 8 of bolt body 3.

In Fig. 7 it can be seen clearly that thread 10 in receiving means 2 is provided at only part of internal surface 11 of receiving means 2. Part of the inner surface 11 of receiving means 2 is therefore free from thread 10. The circumferential segment of free surface (angle β) in receiving means 2, the part of the surface being free from thread 10, is preferably smaller than the circumferential segment of the surface (angle α) of bolt 1 that does comprise thread. As a consequence, bolt 1 can be fed into receiving means 2, without making a mutual screwing motion between said both parts.

In Fig. 5 a sectional view in longitudinal direction of receiving means 2 according to the invention is shown. In this embodiment the inner thread 10 in the through hole in receiving means 2 is clearly visible. A first end 12 of receiving means 2 is provided with an enlarged head 13, whereas a second end 14 has a tapered entrance 15, for an easy entrance of second end 5 of bolt 1.

Fig. 6 and Fig. 8 clearly show that thread 11 is provided over only part of the inner surface of receiving means 2.

Finally, figures 3, 7 and 8 show a closure 16, also identified as closed end 16, of the threads of both bolt 1 and receiving element 2, so as to prevent that thread of the part belonging thereto can be rotated too far, destroying the connection coupling. As can also be seen in especially Fig. 3, this closure provides a continuous edge 16 between thread 9 and surface 8 of bolt body 1 that is not provided with thread. When mutually coupling bolt 1 and receiving means 2 a continuous movement will be made, since thread of bolt will not catch with thread of receiving means 2.

The head 13 my for example be a receiving means for a hex key, a phillips screw driver or any other kind of suitable tool.

The invention is not limited to the embodiments and examples as described above and as shown in the drawing. The invention is limited only by the appending claims.

The invention also embodies every combination of features that have been described in this text independently of each other.

## Claims

1. A combination of a bolt and a cooperating receiving means, said bolt comprising a bolt body extending in a longitudinal direction and that is provided with external thread and said receiving means comprising internal thread cooperating with said bolt's thread for receiving said bolt in said longitudinal direction,
**characterized in that** said bolt is provided with thread at a first portion of its circumference, such that said bolt body in the longitudinal direction over a second portion of the periphery is free of thread; and wherein said receiving means in the longitudinal direction over a portion of its periphery is free of thread, such that said bolt can be inserted at least partly longitudinally in said receiving means without a screwing movement.

2. A combination according to claim 1, wherein the threaded grooves in at least one of the bolt and the receiving means comprise a first, open end for receiving the receiving means' thread or the bolt's thread so as to provide a mutual cooperation of bolt and receiving means, and a second, closed end for locking at said end the receiving means' thread and the bolt's thread in the bolt's thread and the receiving means' thread, respectively.

3. A combination according to claim 2, wherein the closed ends of the thread grooves provide a substantially continuous edge defining the portion of said bolt's surface or the receiving means' surface that is free of thread.

4. A combination according to claim 1, wherein the bolt is provided with thread over a radial circumferential segment of maximally 180°, preferably maximally 120°, more preferably maximally 100°; and wherein said receiving means is free of thread over a radial circumferential segment of less than 180°, preferably less than 240°, more preferably less than 260°.

5. A combination according to claim 1, wherein said bolt is provided with thread that extends from said bolt body, and wherein said receiving means is provided with thread that extends from an inner wall.

6. A combination according to claim 1, wherein said receiving means' thread and said bolt's thread is comprised of buttress thread.

7. A combination according to any of the preceding claims, wherein the sum of (a) the threaded radial circumferential segment of said bolt and (b) the threaded radial circumferential segment of said receiving means, is less than 360°, preferably less than 355°, more preferably less than 350°, and preferably is more than 250°, more preferably more than 300°, and still more preferably more than 340°.

8. A combination according to any of the preceding claims, wherein the thread's pitch angle of the bolt and the thread's pitch angle of the receiving means are dissimilar, for example with a mutual difference of less than 10%, preferably less than 5%.

9. A method for mutually coupling two objects by applying a combination of a bolt and a cooperating receiving means according to any of the preceding claims, wherein said both objects are provided with a through hole, comprising the steps of: - positioning the objects against each other with the openings mutually aligned; - inserting in an opening of aid first object said receiving means and inserting in the opening of said second object said bolt; **characterized in that** the method further comprises the steps of:
- inserting said bolt in said receiving means without a screwing movement, wherein said bolt's external thread is guided through said portion that is free from thread until a clamping force is exerted on both said objects; and - mutually turning the bolt and the receiving means so as to mutually couple said bolt and said receiving means by coupling said threads.

10. A method according to claim 9, wherein at least one of said objects is a covering plate positioned at a door leaf or a window.

11. A method according to claim 10, wherein at least one of said covering plates comprises a rosette or a plate, preferably a long plate or a short plate, for a door or a window.

12. A bolt for use in a combination according to any of claims 1-8, comprising a bolt body with external thread, said bolt body extending in a longitudinal direction,
**characterized in that** said bolt is provided with thread over a portion of the circumference of the bolt body, such that said bolt body in a longitudinal direction is free from thread over part of its circumference.

13. A bolt according to claim 12, wherein the thread grooves of said bolt comprise a first, open end for receiving the receiving means' thread so as to provide a mutual cooperation of bolt and receiving means, and a second, closed end for locking at said end the receiving means' thread in the bolt's thread.

14. A receiving means for use in a combination according to any of claims 1-8, wherein the receiving means is provided with internal thread for cooperation with the bolt's thread,
**characterized in that** said receiving means in a longitudinal direction is free from thread, such that a bolt that is provided with thread over only a portion of the circumference of its body, said body in a longitudinal direction being free from thread over a portion of its circumference, can be guided into said receiving means without a screwing movement.

15. A receiving according to claim 14, wherein the thread grooves of said receiving means comprise a first, open end for receiving the bolt's thread so as to provide a mutual cooperation of bolt and receiving means, and a second, closed end for locking at said end the bolt's thread in the receiving means' thread.
